## Europäisches Patentamt
## European Patent Office
## Office européen des brevets

(19)

(11) Veröffentlichungsnummer: **0 031 153**
**B1**

(12) **EUROPÄISCHE PATENTSCHRIFT**

(45) Veröffentlichungstag der Patentschrift:
06.07.83

(21) Anmeldenummer: **80108042.5**

(22) Anmeldetag: **19.12.80**

(51) Int. Cl.³: **F 24 D 11/00, F 28 D 15/00**

(54) **Wärmespeicheranlage zum Einspeichern von Sonnen- oder Abwärme in mehrere Speichertanks.**

(30) Priorität: **22.12.79 DE 2952178**

(43) Veröffentlichungstag der Anmeldung:
**01.07.81 Patentblatt 81/26**

(45) Bekanntmachung des Hinweises auf die Patenterteilung:
**06.07.83 Patentblatt 83/27**

(84) Benannte Vertragsstaaten:
**AT CH FR GB LI NL**

(56) Entgegenhaltungen:
**DE-A-2 031 192**
**FR-A-2 255 566**
**US-A-4 119 143**

(73) Patentinhaber: **Bossel, Ulf, Dr., Weinhöfe 5,
D-3404 Adelebsen (DE)**

(72) Erfinder: **Bossel, Ulf, Dr., Weinhöfe 5, D-3404 Adelebsen
(DE)**

(74) Vertreter: **Patentanwälte Dipl.-Ing. Rudolf Bibrach
Dipl.-Ing. Elmar Rehberg, Pütterweg 6 Postfach 738,
D-3400 Göttingen (DE)**

Wärmespeicheranlage zum Einspeichern von Sonnen- oder Abwärme in mehrere Speichertanks

Die Erfindung bezieht sich auf eine Wärmespeicheranlage zum Einspeichern von Sonnen- oder Abwärme in mehrere Speichertanks, mit einem Wärmeträgermedium-Kreislauf zum Einspeichern von Wärme und einem Brauchwasser-Kreislauf zum Entnehmen von gespeicherter Wärme, wobei das Wärmeträgermedium sowie das Brauchwasser die Speichertanks jeweils nacheinander durchströmen, und wobei jeder der Speichertanks wenigstens eine als thermische Diode wirkende Wärme-Übertragungseinrichtung aufweist, die im wesentlichen aus einem Wärmerohr besteht, dessen unterer Endbereich eine von dem Wärmeträgermedium durchströmte untere und dessen oberer Endbereich eine von dem Brauchwasser durchströmte Wärmetauschereinheit aufweist.

Eine derartige Wärmespeicheranlage ist aus der US-A-4 119 143 bekannt. Dabei ist ein Wärmeträgermedium-Kreislauf über einen Sonnenkollektor zwangsweise in Reihe mit Wärmetauschern von Speichertanks geschaltet. Jeder Wärmetauscher wirkt als thermische Diode und läßt somit Wärme nur in einer Richtung durch. Die Wärmetauschereinheit arbeitet beispielsweise mit Wasser als Wärmeübertragungsmedium, und zwar zwischen der flüssigen und der dampfförmigen Phase. In der unteren Wärmetauschereinheit wird Wasser durch den Wärmeträgermedium-Kreislauf verdampft. Dieser Dampf steigt in einem Wärmerohr aufwärts, welches den Boden des Speichertanks durchsetzt. Der Dampf gelangt in eine obere Wärmetauschereinheit, die als Rohrschlange ausgebildet ist und kondensiert hier, wobei er die Kondensationswärme an den Inhalt des Speichertanks abgibt. Auch die untere Wärmetauschereinheit besteht lediglich aus einer Rohrschlange. Die Wärme-Übertragungseinrichtung ist geschlossen ausgebildet und hat somit keine Möglichkeit, sich entsprechend der jeweiligen Temperatur auszudehnen. Auch der Wärmeträgermedium-Kreislauf ist geschlossen ausgebildet ohne Expandiermöglichkeit, so daß sich hier in nachteiliger Weise entsprechend hohe Drücke aufbauen können.

Es ist weiterhin eine Anlage bekannt, die nicht mit separaten Speichern arbeitet, sondern mit einem einzigen Speicher, der in bis zu drei Zonen aufgeteilt ist. Der dabei eingesetzte Speicher ist als Doppelwandbehälter ausgebildet, wobei die der Führung des Wärmeträgermediums dienende Doppelwandung in verschiedene Zonen eingeteilt ist, die jedoch alle miteinander in Verbindung stehen. Dies bedeutet, daß das im Kollektor erwärmte Wärmeträgermedium mit Hilfe gesteuerter vorgeschalteter Ventile in unterschiedliche Zonen des einzelnen Behälters eingebracht werden kann, derart, daß auch die nachfolgenden Zonen niedrigeren Temperaturniveaus vom Wärmeträgermedium durchströmt werden. Diese Einteilung in mehrere Zonen bietet zwar thermodynamisch einen gewissen Vorteil gegenüber einem Speichertank mit nur einer Zone, allerdings steigen die Kosten für einen derartigen Speicher und die dazugehörige komplizierte Regeleinrichtung überproportional. Die Regeleinrichtung arbeitet hier mit elektrisch gesteuerten Ventilen und verschiedenen Temperaturfühlern an der Anlage. An eine Hintereinanderschaltung oder auch eine Parallelschaltung derartiger in mehrere Zonen aufgeteilter Speichertanks ist nicht gedacht.

Der Erfindung liegt die Aufgabe zugrunde, eine Wärmespeicheranlage der eingangs beschriebenen Art dahingehend zu verbessern, daß eine effektivere Übertragung der Wärme in der Wärme-Übertragungseinrichtung stattfindet und trotzdem den Volumenänderungen des Wärmeträgermediums bei wechselnden Temperaturen Rechnung getragen wird.

Erfindungsgemäß wird dies dadurch erreicht, daß die untere Wärmetauschereinheit von einem einen Einlaß und einen Auslaß aufweisenden Behälter und einem den Behälter im Abstand umschließenden und nachgiebig ausgebildeten Expansionsgefäß eingeschlossen ist, wobei die Wand des Behälters für den Durchtritt des Wärmeträgermediums in das Expansionsgefäß Öffnungen aufweist. Durch diese Öffnungen ist immer ein Austausch des Wärmeträgermediums möglich. Das Expansionsgefäß nimmt Volumenänderungen des Wärmeträgermediums auf. Ein gesondertes Expansionsgefäß braucht daher nicht in diesem Kreislauf angeordnet werden.

Die Wand des Behälters kann auf ihrer Außenseite mit Wärmedämmaterial belegt sein, wodurch die Verluste noch kleiner werden. Dieses Wärmedämmaterial schützt das Wärmeträgermedium im Innenraum des Behälters zusätzlich zu dem Wärmeträgermedium, welches des Behälter umgebend im Expansionsgefäß ist.

Der von dem Behälter eingeschlossene Innenraum kann durch quer auf das Wärmerohr aufgesetzte, insbesondere aufgeschrumpfte, Kreisscheiben mit wechselseitig angeordneten Durchlässen einen mäanderförmigen Strömungskanal bilden. Damit wird eine besonders große Wärmeübertragungsfläche zur Verfügung gestellt, die in ihren einzelnen Teilen durch das Wärmeträgermedium immer wieder angeströmt wird.

Die Erfindung wird anhand eines bevorzugten Ausführungsbeispieles und im Vergleich zum Stand der Technik in den Zeichnungen verdeutlicht und im folgenden weiter beschrieben. Es zeigt

Fig. 1 eine Wärmespeicheranlage in schematischer Darstellung gemäß einem Stand der Technik,

Fig. 2 die schematische Darstellung der erfindungsgemäßen Wärmespeicheranlage,

Fig. 3 einen Schnitt durch vier in Reihe geschaltete Speichertanks,

Fig. 4 einen Horizontalschnitt durch die vier Speichertanks gemäß Fig. 3,

Fig. 5 einen Horizontalschnitt durch zwei benachbarte Speichertanks mit abgeänderter Verschraubung,

Fig. 6 einen Vertikalschnitt durch die untere Wärmetauschereinheit des Wärmerohres eines Speichertanks,

Fig. 7 einen Horizontalschnitt durch die obere Wärmetauschereinheit eines Wärmerohres und

Fig. 8 eine Seitenansicht eines Teiles der oberen Wärmetauschereinheit des Wärmerohres.

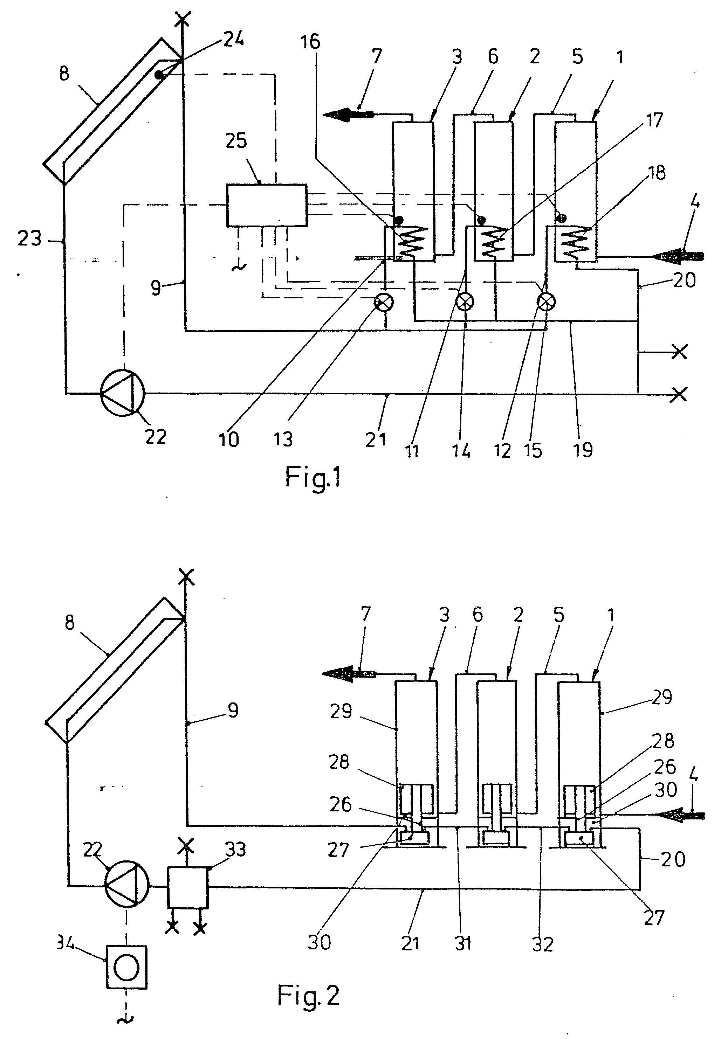

In Fig. 1 ist die Wärmespeicheranlage dargestellt, von der die vorliegende Erfindung ausgeht. Die Speichertanks 1, 2, 3 sind bezüglich der Brauchwasserführung in Reihe hintereinandergeschaltet. Das kalte Brauchwasser tritt vom Leitungsnetz her gemäß Pfeil 4 am Boden des Speichertanks 1 ein und wird oben über die Leitung 5 abgezogen und wiederum nach unten in den Speichertank 2 geleitet. Analog befindet sich zwischen den Speichertanks 2 und 3 die Leitung 6. Gemäß Pfeil 7 wird schließlich das erwärmte Brauchwasser abgezogen und seiner Verwendung zugeführt.

Die Speichertanks 1, 2, 3 können im Stand der Technik wahlweise in den Kreislauf des Wärmeträgermediums einbezogen werden. Im Kreislauf des Wärmeträgermediums ist zunächst ein Sonnenkollektor 8 vorgesehen, von dem eine Leitung 9 für das Wärmeträgermedium zu den Speichertanks 1, 2, 3 führt. Über Abzweigleitungen 10, 11, 12 und darin angeordnete elektrisch steuerbare Ventile 13, 14, 15 kann das Wärmeträgermedium jeweils alternativ in einem der Wärmetauscher 16, 17, 18 der Speichertanks 3, 2, 1 geleitet werden. Aus dem betreffenden Speichertank 3, 2, 1 gelangt das Wärmeträgermedium dann über eine Rückführleitung 19 bzw. 20 über die Leitung 21 zu der Pumpe 22 und von dort über die Leitung 23 wieder zurück an den Anfang des Sonnenkollektors 8. Am Sonnenkollektor 8 ist ein Temperaturfühler 24 angebracht, der als Steuerorgan für die Zentralregeleinheit 25 dient. Von dort aus wird einerseits die Pumpe 22 und andererseits wechsel- bzw. wahlweise die Ventile 13, 14, 15 angesteuert, so daß selektiv Wärme in die Speichertanks 3, 2, 1 gespeichert wird, und zwar in vorgegebenen Temperaturdifferenzen also mit vorgegebenem Temperaturniveau in den einzelnen Speichertanks 1, 2, 3.

Fig. 2 zeigt die erfindungsgemäße Wärmespeicheranlage, bei der zunächst auch die drei Speichertanks 1, 2, 3 in unveränderter Form hinsichtlich der Brauchwasserführung in Reihe hintereinander geschaltet sind. Die Speichertanks 3, 2, 1 sind aber auch hinsichtlich des Kreislaufes des Wärmeträgermediums zwangsweise hintereinandergeschaltet. Zu diesem Zweck ist die Leitung 9 von dem Sonnenkollektor 8 direkt an den Eingang des Wärmetauschers des Speichertanks 3 herangeführt. Der Wärmetauscher besteht aus dem Wärmerohr 26, der unteren Wärmetauschereinheit 27 und der oberen Wärmetauschereinheit 28. Der Brauchwasserbehälter 29 erstreckt sich überhalb des Bodens 30, in welcher das Wärmerohr 26 dichtend vorgesehen ist. In gleicher Weise sind auch die Speichertanks 2 und 1 ausgestattet. Auf der Seite des Wärmeträgermediums ist der Speichertank 3 über die Leitung 31 mit dem Speichertank 2 und dieser über die Leitung 32 mit dem Speichertank 1 verbunden. Aus diesem führen die Leitungen 20 und 21 zur Pumpe 22, der eine Zentraleinheit 33 zum Befüllen, Entleeren und Entlüften vorgeschaltet ist. Eine Zeituhr 34 steuert die Pumpe 22.

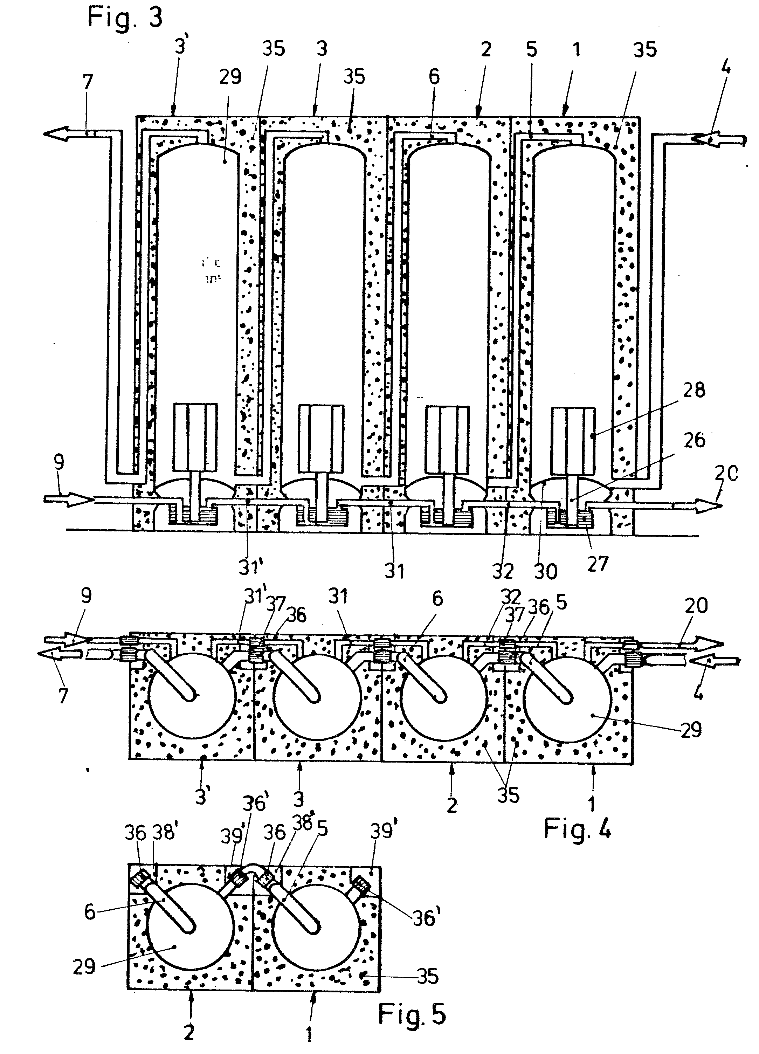

In Fig. 3 sind vier in Reihe hintereinandergeschaltete Speichertanks 1, 2, 3, 3' vorgesehen, die sämtlich identisch ausgebildet sind. Jeder Speichertank ist von einem Isolierstoffblock 35, beispielsweise aus geschäumten Polyurethan umgeben. Die Fig. 4 zeigt, daß der Isolierstoffblock 35 mit quadratischem Querschnitt ausgestattet ist, so daß sich die Einheiten mühelos und leicht nebeneinander aufstellen und aneinander montieren lassen. Zu diesem Zweck müssen lediglich zwei Verschraubungen 36 und 37 zwischen den Einheiten hergestellt werden. Die Verschraubung 36 dient beispielsweise der Verbindung der Leitung 5, die oben an dem Brauchwasserbehälter 29 abzweigt und in einer Ecke niedergeführt ist, an das eingangsseitige Leitungsstück der Leitung 5 des nächsten Speichertanks 2. Die Verschraubung 37 dient der Verbindung der Leitung 32 bzw. der entsprechenden Leitungsstücke an jeder Speichertankeinheit. Analoges geschieht zwischen jeweils zwei benachbarten Speichertanks. Gemäß Fig. 4 sind nur jeweils zwei Verschraubungen 36, 37 zwischen zwei benachbarten Speichertanks 1, 2 bzw. 2, 3 usw. herzustellen. Fig. 5 zeigt eine Ausführungsform, bei der innerhalb aneinander anschließender Aussparungen 38' und 39' zwei Verschraubungen 36 und 36' für die Leitung 5 hergestellt werden müssen. Analoges gilt für die Leitungen 32, 31, 31' usw.

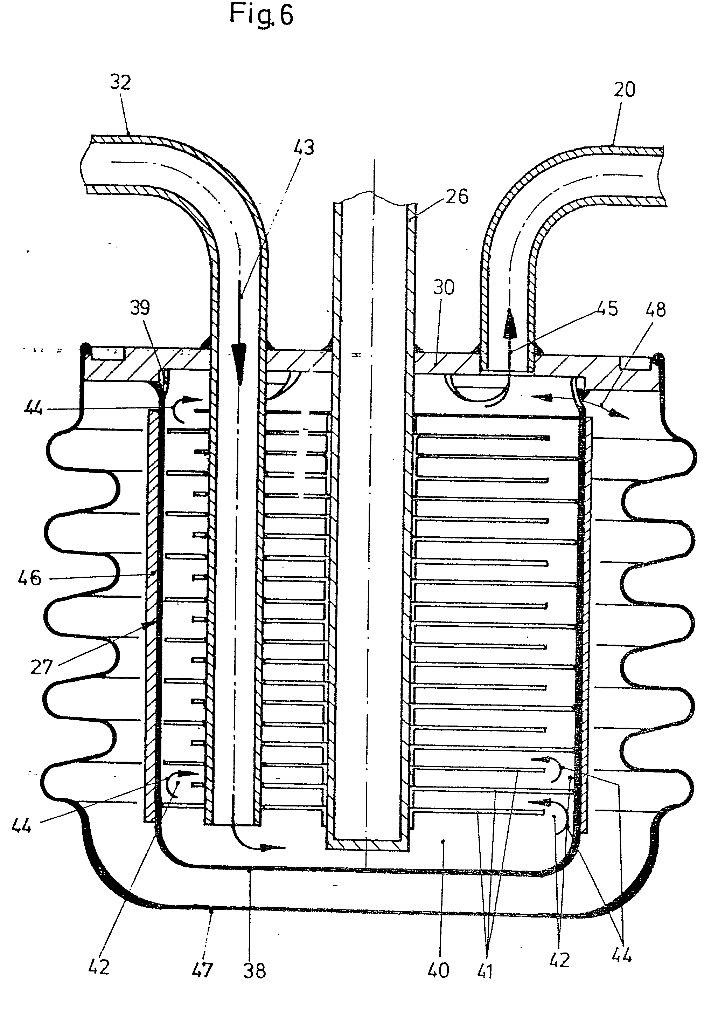

Fig. 6 zeigt in vergrößerter Darstellung und im Vertikalschnitt das Wärmerohr 26 eingelötet bzw. eingeschweißt in den Boden 30, der zugleich die untere Begrenzung des Brauchwasserbehälters 29 darstellt, mit der unteren Wärmetauschereinheit 27. Die untere Wärmetauschereinheit 27 weist einen Behälter 38 auf, der Öffnungen 39 besitzt und ebenfalls an dem Boden 30 befestigt ist. Das Wärmerohr 26 ragt in den Innenraum 40 des Behälters 38 ein. In diesem Abschnitt des Wärmerohres 26 sind Kreisscheiben 41 aufgeschrumpft, die in der dargestellten Weise wechselseitig mit Durchlässen 42 versehen sind. Das Wärmeträgermedium, welches beispielsweise über die Leitung 32 gemäß Pfeil 43 herangeführt wird, wird zunächst durch die Kreisscheiben 41 hindurch in den unteren Bereich des Innenraumes 40 eingebracht, so daß es nacheinander aufsteigend mäanderförmig entsprechend den Pfeilen 44 an den Kreisscheiben 41 entlang geführt wird und schließlich gemäß Pfeil 45 in die Leitung 20 abgegeben wird. Dabei gibt das Wärmeträgermedium entsprechend der herrschenden Temperaturdifferenz Wärme an die Kreisscheiben 41 ab. Die Wärme wird über Wärmeleitung an das Wärmerohr 26 abgegeben, welches mit einem hier nicht dargestellten Wärmeübertragungsmedium gefüllt ist. Dieses Wärmeübertragungsmedium kann Wasser bzw. Wasserdampf sein, der im unteren Rohrbereich, also gegenüber den Kreisscheiben 41 verdampft wird, um dann im oberen Rohrbereich benachbart zu der oberen Wärmetauschereinheit 28 zu kondensieren und innen im Wärmerohr 26 wieder herabzulaufen.

Der Behälter 38 ist auf seiner Außenseite mit einem Wärmedämmaterial 46 belegt. Um diesen Behälter 38 herum ist ein Expansionsgefäß 47 angeordnet, welches beispielsweise als Wellrohr ausgebildet sein kann. Auch das Expansionsgefäß 47 ist mit dem Wärmeträgermedium gefüllt. Es nimmt zusätzlich die nach außen abgegebene Wärme auf. Durch die Austauschmöglichkeit durch die Öffnungen 39 gemäß Pfeil 48 wird auch diese Wärme dem Wärmeträgermedium wieder zugeführt und dann in den nächsten Speichertank hinein abgegeben.

Aus den vorangehenden Ausführungen ist es schon erkennbar, daß das Wärmerohr 26 wie eine thermische Diode wirkt, also Wärme nur in einer Richtung transportiert bzw. überträgt. Diese eine Richtung ist die nach oben weisende Richtung von der Wärmetauschereinheit 27 zur Wärmetauschereinheit 28. Auf dem umgekehrten Weg, also von oben nach unten, kann Wärme praktisch nicht übertragen werden.

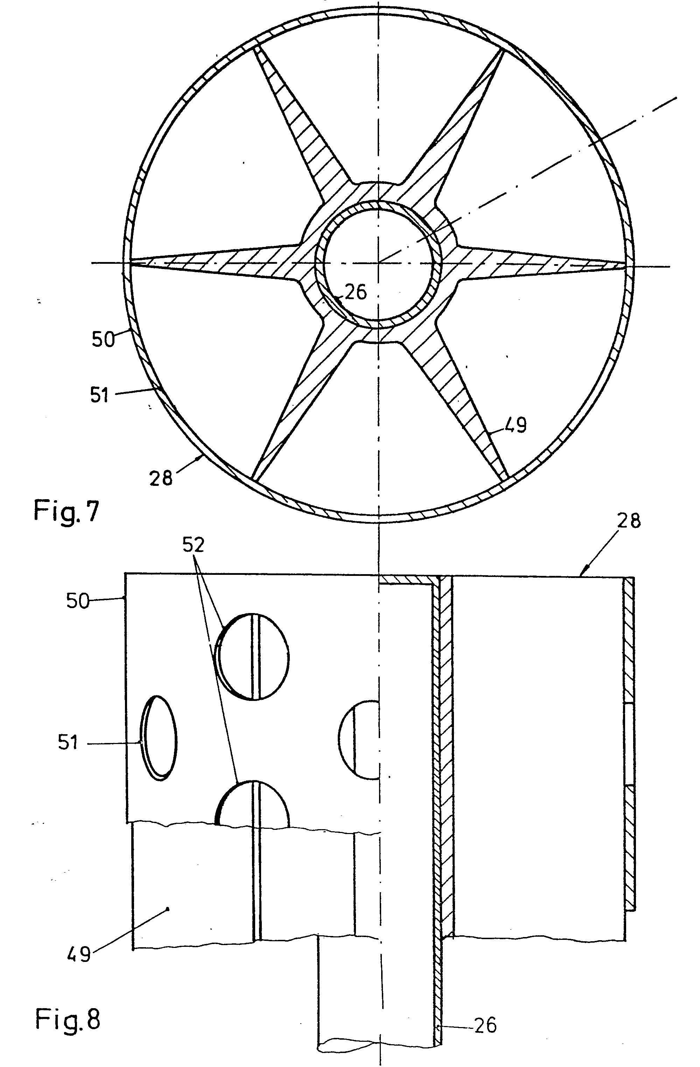

Die Fig. 7 und 8 zeigen die obere Wärmetauschereinheit 28 jedes Wärmerohres 26. In diesem Bereich des Wärmerohres 26 sind senkrecht angeordnete sternförmige Rippen 49 vorgesehen, die zusätzlich von einer Wandung 50 umschlossen sind. Diese Einheit wird von dem Inneren des Brauchwasserbehälters 29 umgeben und befindet sich also oberhalb des Bodens 30. Zwischen den Rippen 49 sind in der Wandung 50 Eintrittsöffnungen 51 für das Brauchwasser und im Bereich der Rippen 49 Austrittsöffnungen 52 für das erwärmte Brauchwasser vorgesehen. Die Austrittsöffnungen 52 sind gegenüber den Eintrittsöffnungen 51 in der Höhe seitlich versetzt angeordnet, so daß eine gewisse Kaminwirkung einerseits und eine horizontale Strömungsführung entlang der Rippen im Bereich der oberen Wärmetauschereinheit 28 eintritt.

## Patentansprüche

1. Wärmespeicheranlage zum Einspeichern von Sonnen- oder Abwärme in mehrere Speichertanks (1, 2, 3, 3'), mit einem Wärmeträgermedium-Kreislauf zum Einspeichern von Wärme und einem Brauchwasser-Kreislauf zum Entnehmen von gespeicherter Wärme, wobei das Wärmeträgermedium sowie das Brauchwasser die Speichertanks jeweils nacheinander durchströmen, und wobei jeder der Speichertanks wenigstens eine als thermische Diode wirkende Wärme-Übertragungseinrichtung aufweist, die im wesentlichen aus einem Wärmerohr (26) besteht, dessen unterer Endbereich eine von dem Wärmeträgermedium durchströmte untere und dessen oberer Endbereich eine von dem Brauchwasser durchströmte obere Wärmetauschereinheit (27, 28) aufweist, dadurch gekennzeichnet, daß die untere Wärmetauschereinheit (27) von einem einen Einlaß und einen Auslaß aufweisenden Behälter (38) und einem den Behälter im Abstand umschließenden und nachgiebig ausgebildeten Expansionsgefäß (47) eingeschlossen ist, wobei die Wand des Behälters für den Durchtritt des Wärmeträgermediums in das Expansionsgefäß (47) Öffnungen (39) aufweist.

2. Wärmespeicheranlage nach Anspruch 1, dadurch gekennzeichnet, daß die Wand des Behälters (38) auf ihrer Außenseite mit Wärmedämmaterial (46) belegt ist.

3. Wärmespeicheranlage nach einem der Ansprüche 1 bis 2, dadurch gekennzeichnet, daß der von dem Behälter (38) eingeschlossene Innenraum (40) durch quer auf das Wärmerohr (26) aufgesetzte, insbesondere aufgeschrumpfte, Kreisscheiben (41) mit wechselseitig angeordneten Durchlässen (42) einen mäanderförmigen Strömungskanal bildet.

## Claims

1. Heat storage installation for storing solar heat or waste heat in a plurality of storage tanks (1, 2, 3, 3') with a heat transfer medium circuit for storing heat and an industrial water circuit for withdrawing stored heat, the heat transfer medium and the industrial water in each case flowing through the storage tanks successively and each of the storage tanks having at least one heat transfer device, acting as a thermal diode and consisting essentially of a heating tube (26) whose lower end region has a lower heat transfer unit (27) through which the heat transfer medium flow and whose upper end region has an upper heat transfer unit (28) through which the industrial water flows, characterised in that the lower heat transfer unit (27) is enclosed by a container (38) having an inlet and an outlet and by an expansion vessel (47) surrounding the container at a distance from the latter and having a yielding construction, the wall of the container having orifices (39) for the passage of the heat transfer medium into the expansion vessel (47).

2. Heat storage installation according to Claim 1, characterised in that the wall of the container (38) is covered with heat insulating material (46) on its outer face.

3. Heat storage installation according to one of Claim 1 to 2, characterised in that the inner space (40) enclosed by the container (38) forms a meandering flow channel as a result of circular discs (41) transversely mounted on, in particular shrunk on to, the heating tube (26), with passages (42) arranged alternately on opposite sides.

## Revendications

1. Installation d'accumulation de chaleur solaire, ou de chaleur de récupération, dans plusieurs réservoirs (1, 2, 3, 3'), comportant un circuit de fluide porteur de calories destiné à l'accumulation de la chaleur ainsi qu'un circuit d'eau d'utilisation destiné au prélèvement de la chaleur accumulée, le fluide porteur de calories et l'eau d'utilisation parcourant chacun l'un après l'autre les réservoirs d'accumulation, et chacun de ceux-ci comportant au moins un système de cession de chaleur agissant comme une diode thermique et composé essentiellement d'un tube échangeur (26), dont la zone d'extrémité inférieure comporte une unité inférieure (27) d'échangeur parcourue par le fluide porteur de calories et dont la zone d'extrémité supérieure comporte une unité supérieure (28) d'échangeur parcourue par l'utilisation, caractérisée en ce que l'unité inférieure (27) d'échangeur est enfermée dans un récipient (38) présentant une entrée et une sortie ainsi que dans un vase d'expansion (47) souple, placé à une certaine distance du récipient et l'entourant, la paroi du récipient présentant des ouvertures (39) pour le passage du fluide porteur de calories dans le vase d'expansion (47).

2. Installation d'accumulation de chaleur suivant la revendication 1, caractérisée en ce que l'extérieur de la paroi du récipient (38) est recouvert d'un matériau calorifuge (46).

3. Installation d'accumulation de chaleur suivant une quelconque des revendications 1 et 2, caractérisée en ce que l'espace intérieur (40) enfermé dans le récipient (38) forme un canal d'écoulement à méandres en combinaison avec des disques (41) fixés, en particulier par frettage, perpendiculairement sur le tube échangeur (26) et en quinconce.

**Fig.1**

**Fig. 2**

Fig. 3

Fig. 4

Fig. 5

## Fig. 6

0 031 153

Fig. 7

Fig. 8